# EUROPEAN PATENT SPECIFICATION

(11) **EP 0 611 462 B1**
(45) Date of publication and mention of the grant of the patent: **04.03.1998**
(21) Application number: 92924225.3
(22) Date of filing: 03.11.1992
(51) Int. Cl.: G06F 12/08

(54) **MEMORY UNIT INCLUDING A MULTIPLE WRITE CACHE**
SPEICHEREINHEIT MIT MEHRFACH SCHREIBBAREM CACHESPEICHER
UNITE DE MEMOIRE COMPRENANT UNE ANTEMEMOIRE D'ECRITURES MULTIPLES

(30) Priority: 04.11.1991 US 787584
(43) Date of publication of application: 24.08.1994
(73) Proprietor: UNISYS CORPORATION, Blue Bell, PA 19424 (US)
(72) Inventor: MAINO, James, G., Exton, PA 19341 (US); NADDEO, Stanley, P., Wayne, PA 19087 (US); SNELL, Charles, K., Frederick, MD 21701 (US)
(74) Representative: Modiano, Guido, Dr.-Ing.
(86) International application number: US9209417
(87) International publication number: WO9309497

(56) References cited:
- US-A- 4 208 716
- US-A- 4 381 541
- COMPUTER ARCHITECTURE NEWS vol. 19, no. 2, April 1991, NEW YORK US pages 53 - 62 , XP203249 SOHI ET AL. 'High-Bandwidth Data Memory Systems for Superscalar Processors'
- PATENT ABSTRACTS OF JAPAN vol. 9, no. 37 (P-335)(1760) 16 February 1985

## Description

### FIELD OF THE INVENTION

This invention relates generally to memory management apparatus for use in a digital data processor and particularly to techniques for improving the efficiency of a memory system including the retrieval and storage of data in a cache memory.

### BACKGROUND OF THE INVENTION

A memory management system controls the access of multiple requestors in a digital data processing system to data and program code in a main memory. In many computer systems, all memory access requests which either fetch or store data are made through a cache memory. A cache memory is a memory that is packaged as an integral component of a processing unit in the computer system. The cache is much smaller than main memory. Its purpose is to emulate the main memory, but with a much faster access time. Since a cache is smaller than main memory, it can only contain a subset of the contents of the main memory at any one time. A directory is used in a cache to identify which parts of the main memory are resident in the cache.

The prior art contains many techniques which improve the ability of cache memory systems to furnish data to and receive data from the central processing unit. U.S. Patent 4,208,716 to Porter, et al. discusses a cache which is partitioned into multiple levels. While a write request is being performed on one level of the cache, one or more read operations from other cache levels may be performed

U.S. Patent 4,905,141 to Brenza discusses the use of a cache which is divided into partitions, where a plurality of processors may each access any of the partitions. Each processor has a partition look-aside table (PLAT) which performs address translation, identifying the partitions and congruence class identifiers of the cache entries most recently referenced by that processor. The cache is capable of performing one store or fetch operation per partition per clock cycle for data which are in the PLAT. Only a subset of the data in cache are listed in the PLAT. If a reference is made to a data value which is not in the PLAT, a global request is issued to all of the partitions. This global request requires all cache partitions for one clock cycle.

U.S. Patent 4,794,521 to Ziegler, et al. discusses a cache capable of concurrently working on the completion of multiple cache accesses. The cache is divided into sections. Each section can handle one access per clock. If the access causes a cache miss, then the cache has the ability to put the first access in a pending-access-completion state while the memory access occurs, and of accepting another cache access. Each section can handle up to three such pending accesses.

From COMPUTER ARCHITECTURE NEWS, Vol. 19, No. 2, April 1991, pages 53-62, there is known a high-bandwidth data memory system for superscalar processors. The known system includes a cache memory with multiple cache banks for providing multiple cache ports.

From PATENT ABSTACTS OF JAPAN, Vol. 9, No. 37, (P-335), [1760], 16.02.85 (corresponding to JP-A-59 117 782) an apparatus for managing access to data is known. This apparatus includes two buffer memory banks which are selected based on the lowest bit of an address being odd or even in value. The same bank may not be accessed to perform read and write operation simultaneously.

### SUMMARY OF THE INVENTION

The invention is set forth in claim 1. Particular embodiments are set forth in claims 2 to 6.

Previously, cache memory systems did not support multiple writes to cache and reads from cache in a single clock cycle. The present invention is embodied in an improved computer system with cache memory, in which requests from multiple sources, including multiple cache write requests and at least one cache read, may be accomplished in a single clock cycle. Those requests which can be concurrently serviced are automatically funnelled to the appropriate cache or memory resources.

According to one aspect of the invention, the cache is divided into two logically distinct page groups. Each page group comprises a plurality of cache pages. Each page group is provided a unique write address and write data signal. Each cache write request consists of data and the cache address and page number in which the data are to be stored. When two cache requests try to write to the cache simultaneously, both write operations are successful so long as they are performed on different page groups.

In order to efficiently provide cache read and write requests from the central processing module (CPM), a Memory Unit (MU) is provided within the CPM. The Memory Unit is responsible for managing the data cache.

According to another aspect of the invention, the MU simultaneously receives memory access requests from multiple requestors within the central processing module. The MU allocates several resources including the two cache memory write paths and at least one cache memory read path. In order to achieve a high level of efficiency, the MU determines what resources are requested by each of its pending requests and allocates these resources so that multiple requests may be handled simultaneously.

### BRIEF DESCRIPTION OF THE DRAWINGS

FIGURE 1 is a block diagram of a cache system which supports two simultaneous write operations.

FIGURE 2 is a block diagram of a central processing module which controls the cache system shown in FIGURE 1.

FIGURE 3 is a block diagram of a Memory Unit which controls the cache shown in FIGURE 1.

### DETAILED DESCRIPTION

The following is a description of an exemplary memory management system in accordance with the present invention.

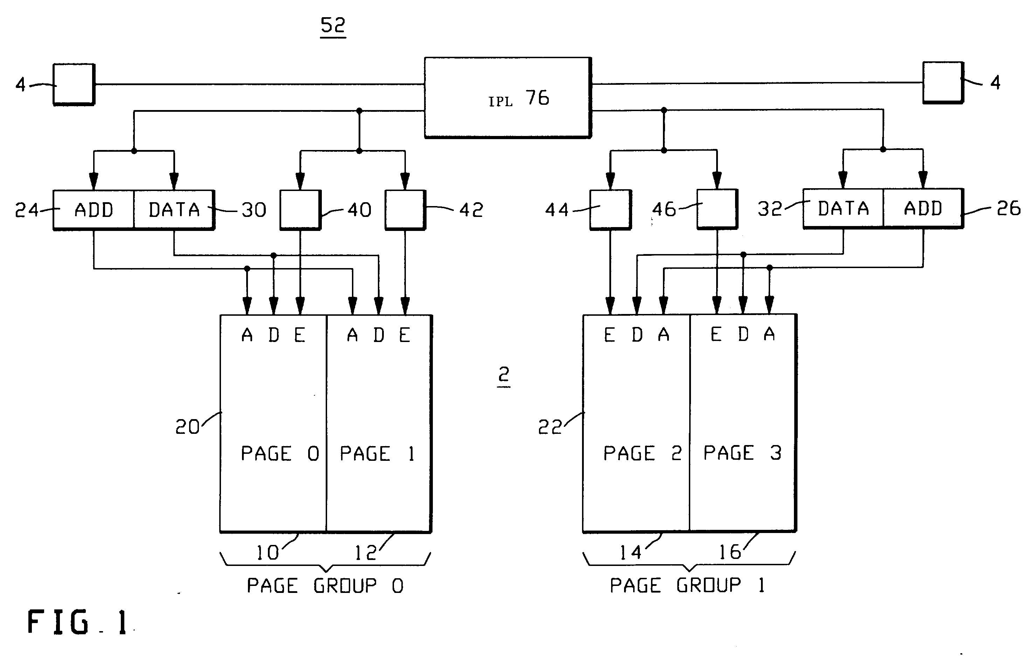

FIGURE 1 shows a cache memory system in accordance with the present invention. Cache memory 2 is a set associative, store-in cache capable of storing up to 4096 data words. Cache memory 2 is partitioned into four direct mapped cache pages 10, 12, 14 and 16, each having a 1024 word capacity. For each 1024 word cache page, 10, 12, 14 and 16, there is a corresponding address array 4, which performs address translation to determine whether a particular data value is stored locally in the cache.

A direct mapped cache is one in which the data associated with any particular absolute address can only be stored in a fixed location within the cache. The ten least significant bits of the absolute address of the data value are used to determine the location in a cache page where the data value is stored. The third through the tenth bits of the absolute address define the congruence class for a data value.

The congruence class addresses four words, having consecutive address values, which are fetched from main memory into the cache in order to take advantage of spatial locality of reference. Spatial locality of reference is the observed tendency of programs to refer to data fetched from memory which have address values that are close together. The group of words in response to a request for a single memory word is often referred to as a line of memory words. The two least significant bits, of the ten-bit address value, which are defined as the word number, define the position of a particular data word within the line of words indicated by the congruence class address.

Each address array 4 contains 256 entries, each of which points to a separate four word line in the cache, one line for each congruence class. To determine whether a data value is stored locally in cache, the entry in the address array 4 corresponding to the congruence class of the data value is accessed. The address array entry holds the 19 most significant bits (called the page select field or PSF) of the absolute address of the data value stored in that portion of the cache. If the page select field in the selected entry from one of the four address arrays matches the 19 most significant bits of the address of the requested data then the requested data value may be in the cache memory 2. The address array entry also includes flags which indicate whether the data cache entry is valid, and whether it has been modified since it was first brought into the cache 2 from main memory (not shown). If a valid entry exists in the address array 4 for the desired congruence class and page select field, then the cache page 10, 12, 14 or 16, corresponding to the address array 4 which contains the matching PSF entry, contains the desired data value.

When a data value is stored in the cache 2, the congruence class and the word number of the absolute address of the data value determines the location within one of the cache pages 10, 12, 14 and 16 in which the data value is to be stored. This storage operation typically requires replacement of data in one of the pages in the cache 2. To select which of the four pages 10, 12, 14 or 16 is used, a Least Recently Used (LRU) algorithm is employed. The LRU algorithm takes advantage of temporal locality of reference which is a recognized tendency of programs to reference the same data values in a relatively short time interval.

The line of data values in the page 10, 12, 14 or 16 which was accessed least recently is selected to be replaced by a four-word line containing the requested data value. Providing four pages 10, 12, 14 and 16 allows the cache 2 to store up to four data words whose absolute addresses map to the same cache address, before it is necessary to castout any data words. This improves the cache hit percentage, which is the ratio of satisfied requests for data to the total number of requests.

In the present invention, the cache pages 10, 12, 14, 16 are divided into two groups 20 and 22, each consisting of two pages 10 and 12 in group 20 and 14 and 16 in group 22. There are two write address registers 24 and 26; two write data registers 30 and 32; and four write enable registers 40, 42, 44 and 46. Data values are written to page 10, 12, 14 or 16 when respective write enable register 40, 42, 44 or 46 is set. When the system writes to either page 10 or page 12, the data provided in write data register 30 is written to the cache at an address provided in write address register 24. Similarly, when the system writes to either page 14 or page 16, the data provided in write data register 32 is written to the cache at an address provided in write address register 26.

When two simultaneous requests to write data into the cache occur, performance is enhanced by servicing both requests in a single clock period, so long as the two requests are writing to different page groups 20 and 22. If two write requests for the same cache page group occur at the same time, one of the requests is queued, and two clock cycles are required to service both requests.

It is understood by one skilled in the art that a larger number of write address registers 24, 26 and write data registers 30, 32 registers can be provided. In particular, the number of pages in the cache memory could be increased and the write address registers and write data registers could be set equal to the number of cache pages. In this alternative embodiment, simultaneous cache write operations would be possible within a single clock cycle, so long as the data values are written to respectively different pages. This variation can improve cache performance over the exemplary system for simultaneous write requests to pages which would, in the exemplary embodiment, be in the same page group. It may, however, require more complex logic to detect and resolve simultaneous write requests for the same page than is required when the exemplary page groups are used.

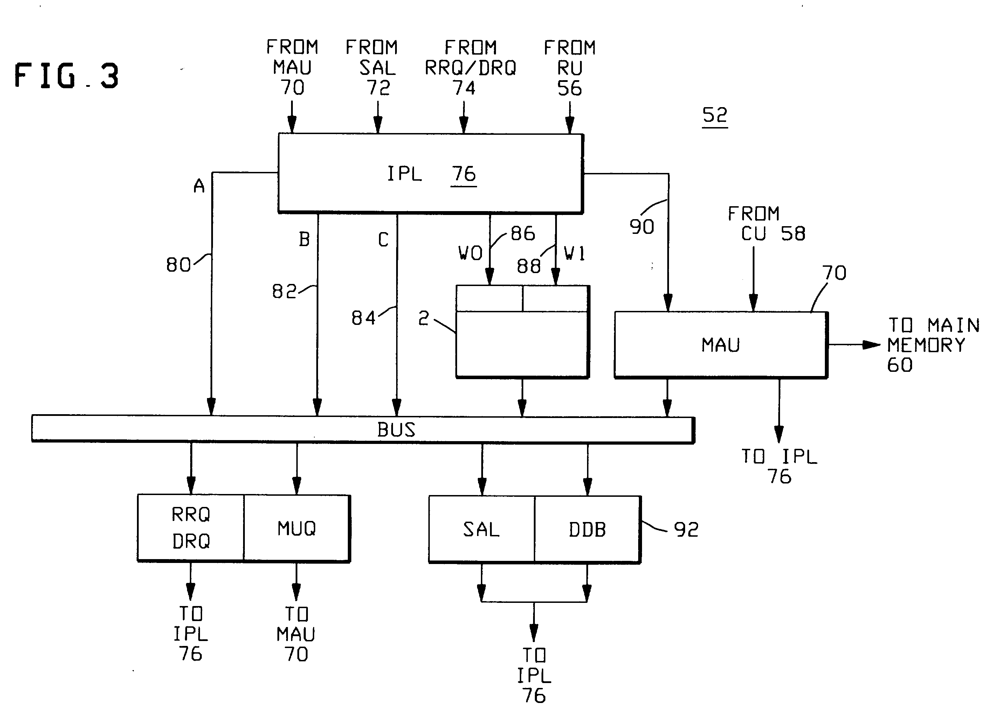

In the present embodiment of the invention, a single read address value is applied to all of the cache partitions from input priority logic of a memory unit which contains the cache memory 2. The target data value is then selected from among the values provided by the various partitions. The memory unit and the input priority logic are described below in reference to FIGURE 3. Both the read operation and two write operations may be performed in a single period of the system clock signal. In the exemplary embodiment of the invention, the read operation is performed at a time later in the clock cycle than the parallel write operations.

It is contemplated that the exemplary cache memory system may be extended to allow multiple simultaneous read operations. This extension could take place without significant change to the cache memory. In one contemplated implementation, the input priority logic of the memory unit would be modified to provide a separate read address value to each partition group or to each individual partition.

The cache memory system 2 is a part of the data processing system which includes an instruction execution unit and a main memory. In order to properly describe the advantages gained by this cache memory architecture, it is helpful to place it in its intended environment.

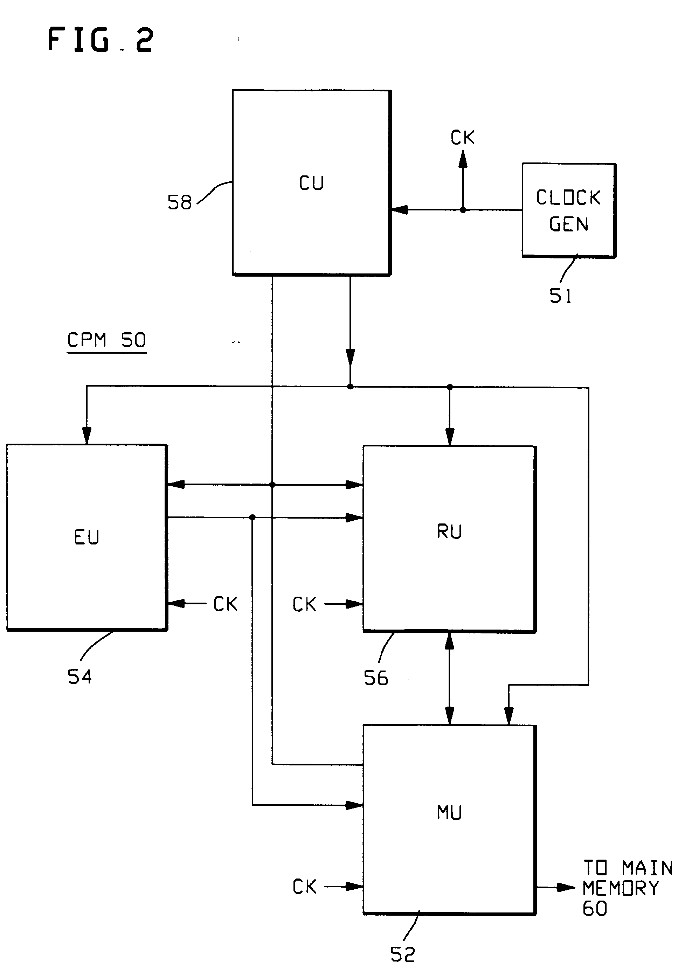

FIGURE 2 shows a block diagram of a Central Processing Module (CPM) 50 used in systems such as the Unisys A19 processing system. The CPM 50 comprises four primary subsystems: the Memory Unit (MU) 52, including the cache memory 2, the Execution Unit (EU) 54, the Reference Unit (RU) 56, and the Code Unit (CU) 58. Also included in the CPM 50 is a clock signal generator 51 which provides a periodic clock signal, CK, to each of the units 52, 54, 56 and 58.

The MU 52 is the connection between all CPM 50 subsystems and main memory 60. The MU 52 is responsible for managing all memory traffic, as well as performing all data fetch and store operations requested by the Reference Unit 56. The MU 52 manages the cache memory system 2 and the other resources, described below, which are available for accessing stored data values in order to decrease the effective memory access time.

Reference Unit 56 provides jobs to MU 52, which are requests for the MU to fetch data. In addition, the RU 56 provides the address values for store requests which will be processed as the data values to be stored are provided by the EU 54. Since the cache 2 is a store-in cache memory, the MU 52 fetches the data values to be overwritten from main memory as soon as the address values are provided by the RU 56. Thus, when the EU 54 provides the data value, it may be stored locally in the cache memory 2 and only returned to the main memory 60 when it needs to be castout.

In general, data values are transferred to or from the MU 52 through the Distributed Data Buffer (DDB) 92. Data may be written to and read from the DDB 92 by the MU 52, EU 54 and RU 56. This buffer is a general purpose register file which is duplicated in the EU 54, RU 52 and MU 52. In the exemplary embodiment, the RU 52 instructs the MU 52 to use the DDB to transfer the data value to or from the main memory 60 through the cache memory 2.

The Code Unit 58 provides jobs to MU 52, which are requests to fetch code from main memory 60. As set forth below, these requests are handled by the MU 52 at a lower priority than data requests.

The Execution Unit 54 evaluates instructions provided by the CU 58 using data values provided by the MU 54 in response to fetch requests provided by the RU 52. The data produced by evaluating the instructions is provided to the MU 54, via the DDB 92, to be stored in the cache memory 2.

FIGURE 3 is a block diagram of a Memory Unit 52. MU 52 includes six resources which are used to effect data transfer among the address arrays 4, the DDB 92, the data cache pages 10, 12, 14 and 16, and main memory 60. These resources are the address array path (A-path) 80, the DDB path (B-path) 82, the cache read path (C-path) 84, the two cache write paths 86, 88 (W0 and W1), and the MAU request path (M-path) 90. Input Priority Logic (IPL) 76 accepts input signals from several functions (or requestors) which request cache and main memory access. Each of these requestors uses a different combination of the resources of the MU 52.

The IPL 76 serves as the main job issuing control element for the MU 52. None of the requestors individually requires all of the resources of the MU 52. Accordingly, the IPL 76 allocates as many of the resources as possible to service multiple requestors within a single period of the system clock signal CK. When, due to resource conflicts, the IPL 76 cannot service all of the requestors in a single clock period, the unprocessed jobs are held in a queue in the IPL along with their accompanying data. The IPL 76 attempts to reissue these jobs during successive clock cycles until they are completed.

IPL 76 receives input signals requesting resources from five different requestors. These requests, also known as jobs, are prioritized by the IPL. The requestors (in order of priority) are the Memory Access Unit (MAU) 70, the Store Address List (SAL) 72, the Return and Replace Queue (RRQ) / Deferred Reference Queue (DRQ) 74, and the Reference Unit (RU) 56. The SAL 72 and the RRQ/DRQ 74 are functions within the MU 52. The remaining input signals are received by IPL 76 from functions external to the MU.

The order of priority is designed to ensure integrity of the cache 2 operation. Because a store-in cache is used, jobs from MAU 70 which move data from main memory 60 to cache 2 must occur before jobs from the SAL 72 which store data into the cache 2.

For example, a store operation may occur as follows: when the CU 58 encounters a store instruction it passes the instruction to the RU 56 which, translates the data address in the instruction into a memory address. The RU 56 then requests a memory read operation of the MU 52 to localize the data in the cache 2 and, at the same time, places an entry for the store operation into the SAL 72 of the MU 52. When the target memory address is localized in the cache memory and the data value to be stored in that address, is marked as a valid entry in a DDB register, the entry in the SAL 72 becomes active as a request to store the data value in the designated DDB register into the cache memory 2.

As illustrated above, the reference unit may process each instruction provided by the code unit to generate multiple memory access requests. Memory access requests generated from several instructions may be pending in the IPL 76 at any given time. Any pending memory access requests which can be handled concurrently by the MU 52 are issued concurrently by the IPL 76.

If, at the time the value in the DDB register becomes valid, the target memory address is not localized in the cache due to an intervening castout operation, the MU issues a request to read the data from main memory 60 and holds the write request in the SAL 72 as an inactive entry. The IPL 76 always processes the oldest active SAL entry.

The RRQ 74a and the DRQ 74b share a single input port to provide signals to the IPL 76. There is logic within RRQ/DRQ 74 to ensure that RRQ jobs always receive priority over DRQ jobs. Jobs are placed in the Deferred Reference Queue 74b when an attempt is made to fetch data before it is stored in the cache. Jobs are placed in the Return and Replace Queue 74a when data must be written to or fetched from main memory 60, but the resources are not available. In the event that the same data value in main memory 60 is being requested by an RRQ 74a job and a DRQ 74b job, it is necessary to continue delaying the DRQ 74b job (e.g. a transfer from cache 2 to the DDB 92) until satisfaction of the RRQ 74a job (e.g. a transfer from main memory 60 to cache 2).

The RRQ/DRQ 74 jobs are processed before the current jobs from RU 56. This ensures the correct ordering of jobs because the RRQ/DRQ jobs were issued earlier and then delayed by being placed in the queue.

For each clock cycle, the IPL 76 attempts to service an MAU 70 job first. With the remaining resources, the IPL 76 then attempts to service a SAL 72 job. If there are still unallocated resources, the IPL attempts to service the RRQ/DRQ 74, and if some of the resources are still available, it attempts to service a job from the RU 56. In addition to jobs serviced by the IPL, an input signal from the Code Unit 58 is provided to the MAU 70 to fetch code from the main memory 60 via MAU access path 90. Requests from the CU 58 always have the lowest priority, so they are not serviced until all of the jobs from the other requestors (controlled via IPL 76) which require the MAU access path 90 are complete. Requests from the CU 58 are processed last, because they bring additional instructions to the CPU, and, so, are likely to generate even more memory requests.

As described above, the MU 52 attempts to process several pending requests at the same time by allocating its available resources among the requests. TABLE 1 illustrates the resources that may be required to complete jobs provided by each of the requestors. The available resources include: an address array lookup and update path (A), a distributed data buffer (DDB) write path (B), a data cache read path (C), an MAU request path (M) and a data cache write path (W). In table 1, the term "Undef." means that the class value is not defined for the requestor.

**TABLE 1**

| Requestor Path Requirements | | | | |
|---|---|---|---|---|
| Class | 0 | 1 | 2 | 3 |
| MAU | A | W | W,B | A,B |
| SAL | A | M | W | |
| Undef. RRQ/DRQ | A,B,C | Undef. | M | M,C |
| RU | A,B,C | B | A,B | Undef |
| Note: CU requests are not provided to the IPL, but are provided directly to the MAU. CU requests are only serviced when no IPL requestor is using the M-path to access main memory. | | | | |

A request consists of a request valid bit, a two-bit request class code, and all data needed to complete the requested transaction. When the IPL 76 allocates a resource to a job of one requestor, the IPL provides the valid bit, the class code, and the data in the request to the allocated resource. As shown in the TABLE, a single requestor may issue up to four different classes of requests, each with different resource requirements. There is no constraint on the class codes of the requests submitted by multiple requestors in a single CPU clock cycle, but any conflict in resource requirements among pending jobs results in a delay, through the IPL, for one or more of the jobs.

The following is an example of the operation of the system. At the start of a clock cycle, the IPL 76 services a class 1 job from MAU 70, only requiring the use of the first data cache write path, W0 86. The IPL 76 has resources available to service a class 2 SAL 72 job which only uses the second data cache write path, W1 88. Even with these two jobs, There are still resources available to service a class 2 job from RRQ 74a. This job only uses the MAU request path 90. Finally, If the next pending job from the RU is a class 1 job, which requires the DDB write path 82, then all four requests can be serviced in a single clock cycle.

The above example illustrates two features of the invention. First, the system can service two separate cache write jobs, one each from the MAU 70 and the SAL 72, in a single clock cycle, although, in the disclosed embodiment, these write jobs are required to be in respectively different page groups. The IPL 76 uses the dual write cache capability shown as shown in FIGURE 1, and previously discussed. Second, the system is capable of servicing up to four different jobs in a single clock cycle. As shown in TABLE 1, several combinations of jobs can result in four simultaneous job executions in a single clock cycle. These combinations may include two writes and two reads, or one write and three reads (one of which is a read from main memory 60, as opposed to cache 2).

An additional feature of the present invention is the cache fill operation. This operation allows further improvement in the utilization of resources. As shown in TABLE 1, an RU 56 request ordinarily requires the DDB write path 82, in addition, and the A-path 80 and C-path 84 may be required. If, during a given clock cycle, a request from RU 56 cannot be processed because a higher priority requestor is using the B-path 82 or the C-path 84, but the A-path 80 is still available, a cache fill job is performed.

For this job, the RU 56 request is permitted to perform an address array lookup to determine cache locality for the request. If a cache hit occurs on the cache fill job, no action is taken and the RU request is reissued from the IPL during the following clock cycle. If, however, a cache miss occurs, then a request is issued to the MU MAU Request Queue (MUQ) 96 which stores the request as an MU job, requesting transfer of data from main memory 60 to cache 2. The cache fill job allows the request for data from main memory 60 to be issued at least one clock cycle earlier than would be possible if the RU 56 job were to wait for the B-path 82 and/or C-path 84 to become available.

The following pseudo-code program segment illustrates the job allocation algorithm used by the IPL 76.
IF MAU Request is valid THEN
Issue the MAU Request
Remove MAU Resources from available resources list
Accept new MAU Request
ELSE
Accept new MAU Request
IF SAL Request is valid THEN
IF all SAL requested resources are available
Issue the SAL Request
Remove SAL resources from avail. resource list
Accept new SAL Request
ELSE
HOLD SAL Request
ELSE
Accept new SAL Request
IF RRQ/DRQ Request is valid THEN
IF all RRQ/DRQ requested resources are available
Issue the RRQ/DRQ Request
Remove RRQ/DRQ resource from avail. list
Accept new RRQ/DRQ Request
ELSE
HOLD RRQ/DRQ Request
ELSE
Accept new RRQ/DRQ Request
IF RU Request is valid THEN
IF all RU requested resources are available
Issue the RU Request
Remove RU resources from avail. resource list
Accept new RU Request
ELSE
IF RU Request Needs A-path
and A-path is available THEN
Attempt Cache Fill operation
ELSE
HOLD RU Request
ELSE
Accept new RU Request

This program segment illustrates the operation of the input priority logic (IPL) 76. For the sake of clarity, the process is presented in the form of a program, in the exemplary embodiment of the invention, however, the algorithm is implemented as a finite-state machine using logic circuits. One of ordinary skill in the art of logic circuit design could readily implement suitable circuitry for the IPL 76 from the program segment and the description of the IPL 76 circuitry given in the specification.

The IPL 76 accepts the jobs to be executed during one cycle of the system clock signal and then selects and issues the jobs during the next clock cycle. From the above program segment, it can be seen that jobs from the MAU 70 are always executed. Jobs originating from the SAL 72, RRQ/DRQ 74, and RU 56 are executed only in the stated priority order, and only if there is no conflict with a higher priority job. Jobs which cannot be completed because the necessary resources are unavailable are held in the IPL 76 and the IPL attempts to process them during the next successive clock cycles.

It is understood by one skilled in the art that many variations of the embodiments described herein are contemplated. These include different cache sizes, different number of cache pages, different page group size, and different number of page groups as well as different number of requestors and different number of available resources.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. Apparatus for managing concurrent access to data values in a cache memory (2) wherein said data values have a corresponding address value, said cache memory (2) being arranged into a plurality of cache memory partition groups (20, 22), said cache memory partition groups (20, 22) being partitioned into a plurality of pages (10, 12, 14, 16), said apparatus further comprising:
address array means (4) for generating address values of locations in said pages (10, 12, 14, 16) in said cache memory (2);
input logic means (76) for associating ones of said plurality of pages (10, 12, 14, 16) into said plurality of cache memory partition groups (20, 22), wherein each said cache memory partition group (20, 22) includes at least two pages (10, 12, 14, 16);
means (40, 42, 44, 46) responsive to the generated address values of respective first and second ones of said data values for enabling respective first and second cache memory partition groups (20, 22) into which first and second data values are to be written;
means (24, 26, 30, 32) for translating the first and second address values of the first and second data values into first and second cache memory address values within the respective first and second selected cache memory partition groups (20, 22), said means (24, 26, 30, 32) for translating including means for providing said first and second cache memory address values and said first and second data values to each of said pages (10, 12, 14, 16);
said responsive means (40, 42, 44, 46) including means for enabling the storage of said first and second data values using the respective first and second cache memory address values; and
means (50) for concurrently storing first and second data values into respective first and second cache memory pages (10, 12, 14, 16).

2. Apparatus as set forth in claim 1 which further comprises:
periodic clock signals means (51) for generating a system clock, and
means (52, 56) for writing data into said cache memory partition groups (20, 22) and for reading data from said cache memory partition groups (20, 22) during a single system clock cycle.

3. Apparatus as set forth in claim 1 which further comprises:
periodic clock signal means (51) for generating a systems clock; and
means (52, 56) for writing data into said pages (10, 12, 14, 16) in the same cache memory partition group (20 22) in subsequent system clock cycles.

4. Apparatus as set forth in one or more of claims 1-3 wherein said input logic means (76) further includes means for mapping each data value to be accessed into a respective one of the plurality of pages (10, 12, 14, 16) based on the address value of the data value to be accessed.

5. Apparatus as set forth in one or more of claims 1-4 wherein said address array means (4) is coupled to said input logic means (76), wherein
said storage means (50) includes a memory unit (52), said memory unit (50) including said cache memory (2), and wherein
said input logic means (76) is coupled to receive a request (56) for stored data values in selected ones of said pages (10, 12, 14, 16) in said memory unit (52).

6. Apparatus as set forth in one or more of claims 1-5 wherein the stored data values have different pages (10, 12, 14, 16) mapped into said cache memory (2) for fetching one or more of said data value from ones of said pages (10, 12, 14, 16).

## Patentansprüche

1. Ein Gerät zur Verwaltung eines gleichzeitigen Zugriffs auf Datenwerte in einem Cache-Speicher (2), worin die Datenwerte über einen entsprechenden Adreßwert verfügen, wobei der Cache-Speicher (2) in einer Mehrzahl von Cache-Speicher-Partitions-Gruppen (20, 22) angeordnet ist, wobei die Cache-Speicher-Partitions-Gruppen (20, 22) in einer Mehrzahl von Seiten (10, 12, 14, 16) partitioniert sind, wobei das Gerät weiterhin folgendes umfaßt:
ein Adreßfeld-Mittel (4) zum Erzeugen von Adreßwerten von Stellen in den Seiten (10, 12, 14, 16) im Cache-Speicher (2);
ein Eingabe-Logikmittel (76), um einige Seiten aus der Mehrzahl von Seiten (10, 12, 14, 16) mit der Mehrzahl von Cache-Speicher-Partitions-Gruppen (20, 22) zu assoziieren, worin jede Cache-Speicher-Partitions-Gruppe (20, 22) mindestens zwei Seiten (10, 12, 14, 16) einschließt;
ein Mittel (40, 42, 44, 46), das auf die erzeugten Adreßwerte von jeweiligen ersten und zweiten Datenwerten reagiert, um jeweilige erste und zweite Cache-Speicher-Partitions-Gruppen (20, 22) freizugeben, in denen erste und zweite Datenwerte geschrieben werden sollen;
ein Mittel (24, 26, 30, 32) zum Umwandeln der ersten und zweiten Adreßwerte der ersten und zweiten Datenwerte in erste und zweite Cache-Speicher-Adreßwerte innerhalb der jeweiligen ersten und zweiten ausgewählten Cache-Speicher-Partitions-Gruppen (20, 22), wobei das Mittel (24, 26, 30, 32) zum Umwandeln ein Mittel zum Bereitstellen der ersten und zweiten Cache-Speicher-Adreßwerte und der ersten und zweiten Datenwerte für jede der Seiten (10, 12, 14, 16) einschließt;
wobei das Reaktionsmittel (40, 42, 44, 46) ein Mittel zur Freigabe der Speicherung der ersten und zweiten Datenwerte einschließt, indem die jeweiligen ersten und zweiten Cache-Speicher-Adreßwerte verwendet werden; und
ein Mittel (50), um gleichzeitig erste und zweite Datenwerte in jeweiligen ersten und zweiten Cache-Speicher-Seiten (10, 12, 14, 16) zu speichern.

2. Das Gerät nach Anspruch 1, das weiterhin folgendes umfaßt:
ein periodisches Taktsignal-Mittel (51) zum Erzeugen eines Systemtaktes, und
ein Mittel (52, 56) zum Schreiben von Daten in den Cache-Speicher-Partitions-Gruppen (20, 22) und zum Lesen der Daten aus den Cache-Speicher-Partitions-Gruppen (20, 22) während eines einzigen System-Taktzyklus.

3. Das Gerät nach Anspruch 1, das weiterhin folgendes umfaßt:
ein periodisches Taktsignal-Mittel (51) zum Erzeugen eines Systemtaktes; und
ein Mittel (52, 56) zum Schreiben von Daten auf den Seiten (10, 12, 14, 16) in derselben Cache-Speicher-Partitions-Gruppe (20, 22) in nachfolgenden System-Taktzyklen.

4. Das Gerät nach einem oder mehreren der Ansprüche 1-3, worin das Eingabe-Logikmittel (76) weiterhin ein Mittel einschließt, um jeden Datenwert, auf den zugegriffen werden soll, auf der Grundlage des Adreßwertes des Datenwertes, auf den zugegriffen werden soll, auf einer jeweiligen Seite der Mehrzahl an Seiten (10, 12, 14, 16) abzubilden.

5. Das Gerät nach einem oder mehreren der Ansprüche 1-4, worin das Adreßfeld-Mittel (4) an das Eingabe-Logikmittel (76) gekoppelt ist, worin
das Speichermittel (50) eine Speichereinheit (52) umfaßt, wobei die Speichereinheit (52) den Cache-Speicher (2) einschließt, und worin
das Eingabe-Logikmittel (76) gekoppelt ist, um eine Anforderung (56) auf gespeicherte Datenwerte in ausgewählten Seiten der Seiten (10, 12, 14, 16) in der Speichereinheit (52) zu empfangen.

6. Das Gerät nach einem oder mehreren der Ansprüche 1-5, worin die gespeicherten Datenwerte unterschiedliche Seiten (10, 12, 14, 16) aufweisen, die im Cache-Speicher (2) abgebildet sind, um einen oder mehrere Datenwerte aus einigen der Seiten (10, 12, 14, 16) abzurufen.

## Revendications

1. Dispositif pour gérer un accès simultané à des valeurs de données situées dans une antémémoire (2), dans lequel lesdites valeurs de données ont une valeur d'adresse correspondante, ladite antémémoire (2) étant agencée en plusieurs groupes de partition d'antémémoire (20, 22), lesdits groupes de partition d'antémémoire (20, 22) étant partitionnés en plusieurs pages (10, 12, 14, 16), ledit dispositif comportant de plus :
des moyens de zone d'adresses (4) pour produire des valeurs d'adresse d'emplacements situés dans lesdites pages (10, 12, 14, 16) de ladite antémémoire (2),
des moyens logiques d'entrée (76) pour associer des pages parmi lesdites plusieurs pages (10, 12, 14, 16) desdits plusieurs groupes de partition d'antémémoire (20, 22), chacun desdits groupes de partition d'antémémoire (20, 22) comportant au moins deux pages (10, 12, 14, 16),
des moyens (40, 42, 44, 46) sensibles aux valeurs d'adresse produites de première et seconde valeurs respectives parmi lesdites valeurs de données pour permettre d'écrire dans les premier et second groupes de partition d'antémémoire respectifs (20, 22) des première et seconde valeurs de données,
des moyens (24, 26, 30, 32) pour traduire les première et seconde valeurs d'adresse des première et seconde valeurs de données en première et seconde valeurs d'adresse d'antémémoire dans les premier et second groupes de partition d'antémémoire respectifs (20, 22), lesdits moyens (24, 26, 30, 32) pour traduire comportant des moyens pour fournir lesdites première et seconde valeurs d'adresse d'antémémoire et lesdites première et seconde valeurs de données à chacune desdites pages (10, 12, 14, 16),
lesdits moyens sensibles (40, 42, 44, 46) comportant des moyens pour permettre la mémorisation desdites première et seconde valeurs de données en utilisant les première et seconde valeurs d'adresse d'antémémoire respectives, et
des moyens (50) pour mémoriser simultanément des première et seconde valeurs de données dans des première et seconde pages d'antémémoire respectives (10, 12, 14, 16).

2. Dispositif selon la revendication 1, comportant de plus :
des moyens de signal d'horloge périodique (51) pour produire une horloge de système, et
des moyens (52, 56) pour écrire des données dans lesdits groupes de partition d'antémémoire (20, 22) et pour lire des données à partir desdits groupes de partition d'antémémoire (20, 22) pendant un cycle d'horloge de système unique.

3. Dispositif selon la revendication 1, comportant de plus :
des moyens de signal d'horloge périodique (51) pour produire une horloge de système, et
des moyens (52, 56) pour écrire des données dans lesdites pages (10, 12, 14, 16) situées dans le même groupe de partition d'antémémoire (20, 22) dans des cycles d'horloge de système ultérieurs.

4. Dispositif selon l'une quelconque des revendications 1 à 3, dans lequel lesdits moyens logiques d'entrée (76) comportent de plus des moyens pour faire une mappe de chaque valeur de données à laquelle on doit avoir accès dans une page respective des plusieurs pages (10, 12, 14, 16) sur la base de la valeur d'adresse de la valeur de données à laquelle on doit avoir accès.

5. Dispositif selon l'une quelconque des revendications 1 à 4, dans lequel lesdits moyens de zone d'adresses (4) sont couplés auxdits moyens logiques d'entrée (76), dans lequel
lesdits moyens de mémorisation (50) comportent une unité de mémoire (52), ladite unité de mémoire (52) comportant ladite antémémoire (2), et dans lequel
lesdits moyens logiques d'entrée (76) sont couplés pour recevoir une requête (56) de valeurs de données mémorisées dans des pages sélectionnées parmi lesdites pages (10, 12, 14, 16) situées dans ladite unité de mémoire (52).

6. Dispositif selon l'une quelconque des revendications 1 à 5, dans lequel les valeurs de données mémorisées ont différentes pages (10, 12, 14, 16) établies en mappe dans ladite antémémoire (2) pour lire une ou plusieurs desdites valeurs de données à partir de pages parmi lesdites pages (10, 12, 14, 16).
